# EUROPÄISCHE PATENTSCHRIFT

(11) **EP 2 567 440 B1**
(45) Veröffentlichungstag und Bekanntmachung des Hinweises auf die Patenterteilung: **10.07.2019**
(21) Anmeldenummer: 11718050.5
(22) Anmeldetag: 03.05.2011
(51) Int. Cl.: H02J 3/14, H02J 7/35, H02H 3/033, H02J 3/38, H02J 9/00, A47L 15/00

(54) **VERFAHREN ZUM VERSORGEN EINES ELEKTRISCHEN HAUSGERÄTS AUS EINEM NIEDERSPANNUNGSVERSORGUNGSNETZ UND EIN ZUM DURCHFÜHREN DES VERFAHRENS GEEIGNETES HAUSGERÄT**
METHOD FOR SUPPLYING AN ELECTRIC DOMESTIC APPLIANCE FROM A LOW VOLTAGE SUPPLY NETWORK AND A DOMESTIC APPLIANCE SUITABLE FOR CARRYING OUT SAID METHOD
PROCÉDÉ D'ALIMENTATION D'UN APPAREIL ÉLECTROMÉNAGER À PARTIR D'UN RÉSEAU D'ALIMENTATION BASSE TENSION ET APPAREIL ÉLECTROMÉNAGER ADAPTÉ À LA RÉALISATION DE CE PROCÉDÉ

(30) Priorität: 05.05.2010 DE 102010028638
(43) Veröffentlichungstag der Anmeldung: 13.03.2013
(73) Patentinhaber: BSH Hausgeräte GmbH, 81739 München (DE)
(72) Erfinder: ALBAYRAK, Hasan Gökcer, 13469 Berlin (DE); BÖLDT, Frank, 14656 Brieselang (DE)
(86) Internationale Anmeldenummer: PCT/EP2011/057020
(87) Internationale Veröffentlichungsnummer: WO 2011/147662

(56) Entgegenhaltungen:
- EP-A1- 0 072 598
- EP-A1- 0 456 872
- EP-A1- 1 367 685
- EP-A2- 0 343 383
- DE-A1- 3 502 826
- DE-A1- 3 913 639
- DE-A1- 19 818 815
- DE-A1-102004 046 758
- DE-A1-102005 032 090
- DE-T1- 208 597
- DE-T2- 69 728 496

## Beschreibung

Die Erfindung betrifft ein Verfahren zum Versorgen eines elektrischen Hausgeräts mit einer Schaltungseinrichtung zum Versorgen interner Verbraucher aus einem Niederspannungsversorgungsnetz, insbesondere aus einem Netz, das aus einer Photovoltaik- oder Windkraftanlage versorgt wird, mit einer Schaltungsanordnung für ein Energiemanagement, durch das die internen Verbraucher nach ihrem Energiebedarf klassifiziert und mit Energie versorgt werden, und mit einer Steuerungsanordnung und Messaufnehmern für die Steuerung von Bearbeitungsprogrammen von Gütern. Die Erfindung betrifft ferner auch ein zum Durchführen des Verfahrens geeignetes Hausgerät.

Die direkte Speisung von elektrischen Geräten mittels einer Kleinspannung aus einem Niederspannungsversorgungsnetz, beispielsweise einem durch regenerative Energiequellen wie Photovoltaik- oder Windkraftanlagen betriebenen und durch Batterien gepufferten Kleinspannungsnetz, ist notorisch. Zum Beispiel sind akkubetriebene Werkzeuge oder Hausgeräte wie Rasierapparate allgemein bekannt. Dazu sind in den elektrischen Geräten keine Netzteile mehr vonnöten, durch welche die aus einem üblichen Wechselspannungs-Hausnetz entnommene Speisung mittels einer Einphasen-Wechselspannung von 230 V∼ über einen Transformator und eine Gleichrichter- und Stromglättungsschaltung eine Speisespannung für elektronische Schaltkreise der Steuerungseinrichtung für das elektrische Gerät hergestellt wird. Der Betrieb von Komponenten höherer Leistung, z. B. von Heizeinrichtungen und Antriebsmotoren, ist bei Geräten, deren Steuerungeinrichtung durch eine Gleichrichter- und Stromglättungsschaltung versorgt wird, weiterhin durch die im Hausnetz angebotene Spannung (230 V∼) möglich. Auch ist ein genereller AC/DC-Wandler in einer Schaltungseinrichtung zum Versorgen interner Verbraucher eines elektrischen Hausgerätes bei Anschluss an ein Niederspannungsversorgungsnetz denkbar.

In einer Solarstrom-Anlage nach DE 35 02 826 A1 wird durch ein Kontrollgerät der Verbraucher einerseits nach Unterschreiten einer vorgegebenen Betriebspannung am Akku abgeschaltet. Eine solche Abschaltung schützt vor Tiefentladung des Akkumulators. Andererseits wird aber der Verbraucher nach Wiederkehr einer ausreichend hohen Versorgungsspannung auch automatisch wieder eingeschaltet, wobei die Wiedereinschaltspannung deutlich höher liegt als die Abschaltspannung. Dadurch ist sichergestellt, dass die Batterie nach der Schutzabschaltung zunächst ganz oder zumindest in einem erheblichen Maße wieder aufgeladen wird, ehe der Verbraucher wieder angeschaltet wird. Das Kontrollgerät kann dazu auch die Ab- und Wiedereinschaltung an deutlich unterschiedliche Lasten von Verbrauchern anpassen. So werden schwache Verbraucher im Gegensatz zu stärkeren Verbrauchern schon wieder angeschaltet, wenn die Batterie noch nicht vollständig wieder aufgeladen ist, aber trotz der Wiedereinschaltung eines schwachen Verbrauchers der Ladebetrieb noch aufrecht erhalten werden kann. Dadurch können insbesondere bei schwachen Verbrauchern längere Betriebspausen vermieden werden. Eine solche Anlage ist jedoch für elektrische Verbraucher schlecht geeignet, die mehrere interne und zumindest teilweise parallel betriebene Verbraucher mit unterschiedlichen Verbrauchscharakteristiken aufweisen.

Ein gattungsgemäßes Verfahren und eine Anordnung zur Abschaltung von Verbrauchern gemäß DE 196 37 574 A1 sehen vor, eine Spannungsquelle mit mehreren angeschlossenen Verbrauchern bei Unterschreiten einer Schwellenspannung nicht alle Verbraucher sofort abzuschalten. Vielmehr wird die sofortige Abschaltung aller Verbraucher dadurch vermieden, dass eine Regelschaltung bestimmt, welche der angeschlossenen Verbraucher einzeln gestaffelt abgeschaltet oder nur noch vermindert mit Energie beliefert werden. Dabei wird die Reihenfolge der Verminderungen oder Abschaltungen nach der Art der Verbraucher (Wärmegerät, Kraftgerät) und nach deren Energiebedarf festgelegt. Eine solche gestaffelte Abschaltung vermeidet u. U. die Abschaltung des einen oder anderen Verbrauchers überhaupt. Eine differenzierte Wiedereinschaltung ist nicht vorgesehen. Auch deshalb ist ein solches bekanntes Verfahren für elektrische Hausgeräte mit mehreren internen Verbrauchern ungeeignet.

Durch DE 203 02 943 U1 ist schon ein Lade- und Entlademanagement bekannt, um Akkumulatoren aus mehreren unterschiedlichen Energiequellen möglichst schonend zu laden, Über- oder Unterladungen zu vermeiden und die einzelnen Energiequellen optimal zu nutzen. Dabei wird für den Betrieb von elektrischen Verbrauchern auch deren entnommene Energie, z. B. durch Beobachtung der Entladeströme, überwacht, wobei nicht näher ausgeführt ist, welchen Einfluss die unterschiedlichen gemessenen Entladeströme haben. Ansonsten bezieht sich das Management hauptsächlich auf die Berücksichtigung möglichst aller bekannter Typen von Energiequellen für die Ladevorgänge eines oder mehrer Akkumulatoren. Eine Lösung für das Management mehrerer interner Verbraucher in einem elektrischen Hausgerät lässt sich daraus nicht ableiten. Weiterer Stand der Technik kann den Dokumenten EP0 072 598 A1, DE 198 18 815 A1, DE 10 2004 046 758 A1, EP 1 367 685 A1 und DE 10 2005 032 090 A1 entnommen werden.

Der Erfindung liegt die Aufgabe zugrunde, ein eingangs beschriebenes Verfahren und ein zum Durchführen des Verfahrens geeignetes Hausgerät anzugeben, durch das elektrische Niederspannungsquellen, insbesondere solche, die mit Akkumulatoren betrieben bzw. gepuffert sind, z. B. Solar- oder Windkraftanlagen, vor zu großen elektrischen Belastungen geschützt sind. Vor allem sollen aber Bearbeitungsprogramme von programmgesteuerten elektrischen Hausgeräten vor unvollständiger Beendigung geschützt werden, wenn vor oder im Verlaufe eines Bearbeitungsprogramms die Niederspannungsversorgung wegen temporärer Überlastung zusammenbricht. Ein solcher Schutz vor einer unvollständigen Beendigung soll insbesondere für den Fall bereitgestellt werden, wenn das Hausgerät bzw. einzelne Verbraucher des Hausgeräts aus einen externen Niederspannungsversorgungsnetz, das eine Schutzkleinspannung bereitstellt, versorgt wird. Unter der Schutzkleinspannung wird eine Wechselspannung von kleiner gleich 50 V oder eine Gleichspannung von kleiner gleich 120 V verstanden.

Die genannte Aufgabe wird gelöst durch das Verfahren gemäß dem unabhängigen Patentanspruch 1 und die Vorrichtung gemäß dem unabhängigen Patentanspruch 2. Bevorzugte Ausführungsformen sind Gegenstand der Unteransprüche.

Die Lösung dieser Aufgabe gelingt auf unterschiedliche Weise. Einerseits kann die Lösung in einem Verfahren bestehen, bei dem der Energiebedarf jedes internen Verbrauchers bekannt und in der Schaltungseinrichtung abgespeichert ist, dass die Versorgung der internen Verbraucher in Abhängigkeit von ihrem Energiebedarf und von ihrem Verbrauchsprofil gestaffelt abgeschaltet werden, wenn das Energieangebot des Niederspannungsversorgungsnetzes für die Speisung aller internen Verbraucher zu gering wird, und dass die Wiedereinschaltung der internen Verbraucher nach derselben Abhängigkeit gestaffelt wird. Dadurch ist der Weiterbetrieb des Bearbeitungsprogramms in den meisten Fällen möglich, weil bestimmte Verbraucher im elektrischen Gerät durchaus vorübergehend abgeschaltet werden können, ohne den Erfolg des Bearbeitungsprogramms gleich ganz infrage zu stellen. Beispielsweise kann die Heizung einer Waschmaschine oder einer Geschirrspülmaschine durchaus vorübergehend abgeschaltet werden, ohne den Reinigungserfolg generell zu gefährden. Sobald das Niederspannungsversorgungsnetz wieder ausreichend leistungsfähig ist, kann die verloren gegangene Heizenergie wieder aufgeholt werden. U. U. verlängert sich dadurch das Bearbeitungsprogramm, was aber meistens tolerabel ist.

In dieser Hinsicht sicherer ist eine zweite Lösung bei der vor dem Starten eines gewählten Bearbeitungsprogramms der von der zugeordneten Güterbearbeitung abhängige Summen-Energiebedarf aller internen Verbraucher über das gesamte Bearbeitungsprogramm ermittelt und mit dem aktuellen Energieangebot des Niederspannungsversorgungsnetzes verglichen wird, und dass das Bearbeitungsprogramm erst dann gestartet wird, wenn der Vergleich ein höheres Energieangebot als den zugeordneten Summen-Energiebedarf ergeben hat. In diesem Fall wird erst abgewartet, bis die ausreichende Leistungsfähigkeit des Niederspannungsversorgungsnetzes wieder gegeben ist, ehe das gewählte Betriebsprogramm überhaupt automatisch gestartet wird. Dies hat einerseits den Vorteil, dass das Betriebsprogramm zumeist vollständig und ohne Einschränkungen - etwa der einzusetzenden Heizenergie - beendet werden kann. Allerdings wird vom Betreiber der Anlage dann die Toleranz gefordert, auf den Beginn und die Abarbeitung des Betriebsprogramms länger zu warten als beim Sofortstart. Da allerdings Betreibern von Niederspannungsnetzen der genannten Art die nicht immer hundertprozentige Versorgungssicherheit bewusst ist, wird man diese Toleranz voraussetzen können. Dies gilt natürlich auch im Hinblick auf die Einschränkung bei Anwendung der ersten Lösung. Vor allem für elektrische Hausgeräte, deren Betriebsprogramme keinerlei Unterbrechung oder Verlängerung bzw. Verminderung etwa der eingebrachten Heizenergie gestatten, etwa thermische Nahrungsbereitungsgeräte, wie Herde, Backöfen oder Kochmulden, ist jedoch eher die zweite Lösung vorzuziehen.

Für die zweite Lösung ist es von besonderem Vorteil, wenn gemäß einer Fortbildung des Verfahrens bei der Ermittlung des Summen-Energiebedarfs die ungünstigsten Bedingungen zugrunde gelegt werden. Beispielsweise bei einer Waschmaschine oder einer Geschirrspülmaschine sollte der Energiebedarf der Heizeinrichtung aufgrund einer niedrigsten möglichen Anfangstemperatur des zu erhitzenden Wassers errechnet werden. Der Energiebedarf eines Antriebsmotors sollte auf die schwierigsten möglichen Betriebsbedingungen abgestellt werden, bei einer Waschmaschine beispielsweise für das größte zu erwartende Drehmoment der befüllten Wäschetrommel.

Beide Lösungen sind insbesondere von Vorteil, wenn von dem Niederspannungsversorgungsnetz eine Schutzkleinspannung bereitstellt wird. In diesem Fall werden alle internen Verbraucher (11) des Hausgeräts aus dem Niederspannungsversorgungsnetz (5) der Schutzkleinspannungsklasse versorgt. Wenn das Hausgerät Verbraucher enthält, die eine höhere Betriebsspannung als Schutzkleinspannung erfordern, enthält das Hausgerät zur Versorgung solcher Verbraucher bevorzugt auch einen Umformer, der die Schutzkleinspannung auf die Betriebsspannung dieser Verbraucher umwandelt.

Erfindungsgemäß ist eine eine Mischform beider Lösungen denkbar; denn selbst wenn generell abgewartet wird, bis das Energieangebot des Netzes für die ununterbrochene Abarbeitung eines gewählten Bearbeitungsprogramms ausreicht, ist auch während dieser Abarbeitung eine Schwächung des Energieangebotes des Niederspannungsversorgungsnetzes noch möglich. Auch dann sollte aber das gerade laufende Programm immer noch zu Ende geführt werden können. Eine Umschaltung auf den Modus gemäß der erstgenannten Lösung wäre dann noch vorteilhafter als ein völliger Abbruch des gerade laufenden Programms.

Eine weitere sehr vorteilhafte Weiterbildung des Verfahrens der zweiten Lösung stellt sich ein, wenn bei einem aufgrund einer zu geringen Leistungsfähigkeit des Niederspannungsversorgungsnetzes aufgehaltenen Betriebsprogramm die Leistungsfähigkeit ständig überwacht wird, und das Betriebsprogramm automatisch gestartet wird, sobald die Leistungsfähigkeit den Summen-Energiebedarf übersteigt. Dann kann der Betreiber eines programmgesteuerten Hausgeräts für das gewählte Programm den Startbefehl bereits geben, ohne sich darum kümmern zu müssen, ob das Programm aufgrund vorhandener Leistungsfähigkeit des Niederspannungsversorgungsnetzes schon starten kann oder aufgrund nicht aktuell vorhandener Leistungsfähigkeit erst später gestartet werden kann.

Die Durchführung eines dieser Verfahren kann aufgrund der in den Unteransprüchen gekennzeichneten Merkmale in beliebiger, sinnvoller Kombination erfolgen, ohne vom generellen Erfindungsgedanken abzuweichen. Bevorzugte Weiterbildungen des Verfahrens stellen sinngemäß auch bevorzugte Weiterbildungen des Hausgeräts und umgekehrt dar.

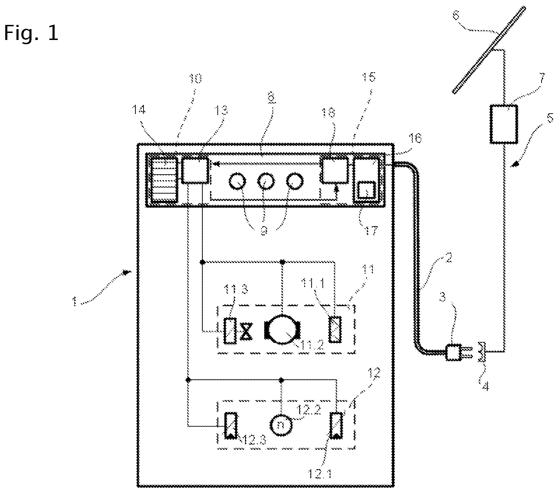

Anhand eines in der Zeichnung dargestellten Ausführungsbeispiels für ein programmgesteuertes Hausgerät ist das erfindungsgemäße Verfahren näher erläutert. Die einzige Zeichnung zeigt ein schematisch dargestelltes Hausgerät mit Einrichtungen zur Programmsteuerung und zum Wählen eines von vorgegebenen Programmen. Dieses Hausgerät kann jede Art von programmgesteuerten Hausgeräten sein, wie Waschmaschinen, Wäschetrockner, Waschtrockner, Geschirrspülmaschinen, Herde, Backöfen, Kochmulden usw.

Beide oben beschriebenen Lösungen sowie ihrer speziellen Ausprägungen werden anhand derselben Figur beschrieben. Dafür sind einzelne Baugruppen des programmgesteuerten Hausgerätes intern unterschiedlich ausgestaltet, worauf jedoch nur im Sinne ihrer Funktionsinhalte eingegangen werden wird, weil der Fachmann ohne weiteres in der Lage ist, die jeweilige Funktion schaltungstechnisch darzustellen.

Das dargestellte Hausgerät 1 ist über eine Anschlussleitung 2 mit Netzstecker 3 an eine Steckdose 4 eines Niederspannungsversorgungsnetzes 5 - nachfolgend als Netz 5 bezeichnet - anschließbar, das im Wesentlichen aus einer Spannungsquelle 6 - hier schematisch als Fotovoltaik-Solargenerator dargestellt, anstelle dessen aber auch eine Windgeneratoranlage verwendet werden kann - und einem Umformer 7 besteht. Der Umformer 7 kann je nach Bedürfnissen Zeitsteuerungsprogramme, Spannungsüberwachungs- und -glättungseinrichtungen, Fernsteuerungseinrichtungen o. Ä. enthalten. Mit dem Umformer 7 wird insbesondere ein Versorgungsnetz 5 mit Schutzkleinspannung bereitgestellt. Er könnte aber auch dafür eingerichtet sein, die angebotene Gleichspannung des Generators 6 in eine übliche Wechselspannung von 230 V∼ umzuformen. Der Umformer 7 kann aber auch - wenn erforderlich - einen Akkumulator für die Sammlung der geernteten Elektroenergie enthalten bzw. dem Umformer 7 kann der Akkumulator nachgeschaltet sein. Auf den Umformer 7 kann verzichtet werden, wenn die Spannungsquelle 6 eine Spannung bereitstellt, mit der das Hausgerät 1 betrieben werden kann.

Für den Fall, dass das Hausgerät 1 mit Schutzkleinspannung betrieben werden soll und es Verbraucher enthält, die eine höhere Betriebsspannung erfordern, kann das Hausgerät zur Versorgung solcher Verbraucher auch einen Umformer enthalten, der die Schutzkleinspannung auf die Betriebsspannung dieser Verbraucher umwandelt.

Die Schaltungseinrichtung 8 des elektrischen Hausgerätes 1 enthält Eingabeeinrichtungen 9 zum Wählen von Programmen und einzelnen Parametern solcher Programme zum Behandeln von Gütern, z. B. von Nahrung, Trink- und Brauchwasser, Geschirr oder Wäsche. Weiterhin enthält die Schaltungseinrichtung 8 eine Programmsteuerungsanordnung 10 zum Versorgen der internen Verbraucher 11 mit Energie und zum Messen und Verwerten von Signalen der Sensoren 12, welche die durch die internen Verbraucher 11 erzeugten Zustände an die Programmsteuerung 10 melden. Unter den Verbrauchern 11 befinden sich beispielsweise thermische Verbraucher 11.1 (Heizungseinrichtung), motorische Verbraucher 11.2 (Antriebsmotoren für unterschiedliche Bewegungsbedürfnisse) und Magnetartikel 11.3 (Ventilsteuerungen). Entsprechende Sensoren 12.1 zur Wärmemessung, 12.2 zur Drehzahlmessung und 12.3 zur Niveaumessung (z. B. von Waschlauge) repräsentieren die Parametermessung innerhalb des Hausgerätes 1. Die Programmsteuerungsanordnung 10 enthält eine Programmsteuergerät 13 und einen Speicher 14 für die einzelnen Werte des Energiebedarfs jedes internen Verbrauchers 11.1 bis 11.3.

Anderseits enthält die Schaltungseinrichtung 8 einen Energiemanager 15 mit einer Netzanschlusseinrichtung 16 des Hausgerätes 1, zu der auch die Anschlussleitung 2 mit Stecker 3 gehört. In der Netzanschlusseinrichtung 16 beobachtet ein Monitor 17 die Leistungsfähigkeit des Netzes 5. Ein Vergleicher 18 entscheidet, ob die Gesamtheit oder einzelne Teile der internen Verbraucher 11 mit Energie versorgt werden können.

Im Verfahren gemäß der Erfindung wird nach der Wahl eines gewünschten Bearbeitungsprogrammes an der Eingabeeinrichtung 9 von der Programmsteuerungsanordnung 10 anhand der im Speicher 14 abgelegten Werte für den jeweiligen Energiebedarf der internen Verbraucher 11 und anhand des Einsatzprogrammes dieser Verbraucher der Energiebedarf jedes Verbrauchers 11.1 bis 11.3 über das gesamte Bearbeitungsprogramm ermittelt und für den Vergleich mit der Leistungsfähigkeit des Netzes 5 bereit gehalten.

Das Programm wird nun gestartet, vorausgesetzt, das Netz 5 ist aktuell überhaupt leistungsfähig. Während des Ablaufs des Behandlungsprogramms wird nun vom Monitor 17 die Leistungsfähigkeit des Netzes 5 laufend geprüft und das Prüfungsergebnis dem Vergleicher 18 gemeldet. Da dem Vergleicher 18 außerdem vom Programmsteuergerät 13 ständig gemeldet wird, wie hoch der Energiebedarf des oder der Verbraucher 11 ist, die im vorausliegenden Programmschritt unbedingt mit Energie versorgt werden müssen, kann der Vergleicher 18 stets entscheiden, ob überhaupt und ggf. ob noch genug Energie vorhanden ist, und dies dem Programmsteuergerät 13 antworten. Dementsprechend kann das Programmsteuergerät 13 den einen oder anderen Verbraucher 11.1 bis 11.3 - wenn nötig - vorläufig nicht mit Energie versorgen, bis der Vergleicher 18 aufgrund einer aktuellerweise gestiegenen Leistungsfähigkeit des Netzes 5 die weitere Versorgung von internen Verbrauchern 11 wieder freigeben kann.

Eine vorübergehende Abschaltung kann bei thermoelektrischen Geräten häufig die entsprechenden Verbraucher, nämlich Heizungseinrichtungen 11.1, betreffen. Ein mit Einsatz von thermischer Energie ablaufendes Behandlungsprogramm kann u. U. auf weiteren Eintrag von Heizenergie vorübergehend verzichten und sein Erfolg demgegenüber durch kompensierende Verlängerung der Behandlung dennoch erzielt werden. Dies könnte beispielsweise bei Wasch- oder Geschirrspülmaschinen oder Geräten zur Wasseraufbereitung angewendet werden.

Für elektrische Hausgeräte 1, deren Programmablauf eher nicht unterbrochen werden sollte, wie beispielsweise Back- oder Bratgeräte, die einem auf die Behandlung von Gargut abgestimmten, wählbaren thermischen Programmablauf folgen müssen, wenn der Garerfolg eintreten soll, und sonst keine internen Verbraucher 11 enthält, die vorübergehend abgeschaltet werden können, ist ein Einsatz der zweiten Lösung gemäß der Erfindung vorzuziehen.

Bei dieser zweiten Lösung wird vor dem Starten eines an der Eingabeeinrichtung 9 gewählten Behandlungsprogramms vom Programmsteuergerät 13 anhand der im Speicher 14 abgelegten Werte für die jeweilige Leistung der einzusetzenden internen Verbraucher 11 und anhand ihrer Einsatzprofile im gewählten Behandlungsprogramm der Summen-Energiebedarf errechnet. Das ist die Summe aller einzelnen Energieeinsätze für jeden internen Verbraucher 11.1 bis 11.3 über den gesamten Programmablauf. Dieser Summen-Energiebedarf wird an den Vergleicher 18 im Energiemanager 15 gemeldet, der ihn mit dem aktuellen Energieangebot des Netzes 5 vergleicht. Stattdessen oder zusätzlich kann dieser Vergleich auch eine maximale Spitzenleistung aller jeweils gleichzeitig eingesetzter interner Verbraucher 11 mit der aktuellen Leistungsfähigkeit des Netzes 5 enthalten. Wenn dieser Vergleich jeweils positiv ausfällt, kann das Behandlungsprogramm gestartet werden. Andernfalls wird mit dem Start gewartet, bis eine solche Leistungsfähigkeit vorliegt. Dazu dient der Monitor 17, der den Vergleich ständig oder in Intervallen anregt.

Aber auch bei Einsatz der zweiten Lösung und positivem Vergleich kann unter dem Abarbeiten eines einmal gestarteten Behandlungsprogramms die Leistungsfähigkeit des Netzes 5 zusammenbrechen, so dass eine störungsfreie Abarbeitung nicht mehr stattfinden kann. Da sich das Energiemanagement 15 ständig im Einsatz befindet, könnte der Vergleicher 18 in einem solchen Fall während des laufenden Behandlungsprogramms dem Programmsteuergerät 13 eine Negativ-Meldung abgeben, worauf hin das Programmsteuergerät eine Entscheidung treffen muss über einen Sofortabbruch des laufenden Behandlungsprogramms oder eine Fortführung unter den Bedingungen der ersten Lösung. Wenn der einschränkende Weiterbetrieb unter den Bedingungen der ersten Lösung noch toleriert werden kann, wäre es von Vorteil, den Betriebsmodus von diesem Zeitpunkt an auf die erste Lösung umzustellen.

### Bezugszeichenliste

- 1: Elektrisches Hausgerät
- 2: Anschlussleitung
- 3: Netzstecker
- 4: Steckdose
- 5: Niederspannungsversorgungsnetz, Netz
- 6: Fotovoltaikgenerator, Generator
- 7: Umformer
- 8: Schaltungseinrichtung
- 9: Eingabeeinrichtung
- 10: Programmsteuerungsanordnung
- 11: Interne Verbraucher
- 11.1: Interner Verbraucher, Heizungseinrichtung
- 11.2: Interner Verbraucher, Antriebsmotor
- 11.3: Interner Verbraucher, Magnetartikel, Ventilsteuerung
- 12: Sensoren
- 12.1: Sensor zur Wärmemessung
- 12.2: Drehzahlmesser
- 12.3: Niveaugeber
- 13: Programmsteuergerät
- 14: Speicher
- 15: Energiemanager
- 16: Netzanschlusseinrichtung
- 17: Monitor
- 18: Vergleicher

## Patentansprüche

1. Verfahren zum Versorgen eines elektrischen Hausgeräts (1) mit einer Schaltungseinrichtung (8) zum Versorgen interner Verbraucher (11), mit einer Schaltungsanordnung (15) für ein Energiemanagement, durch das die internen Verbraucher (11) nach ihrem Energiebedarf klassifiziert und mit Energie versorgt werden, und mit einer Programmsteuerungsanordnung (10) und Messaufnehmern (12) für die Steuerung von Bearbeitungsprogrammen von Gütern, **dadurch gekennzeichnet, dass**
- das Hausgerät aus einem Niederspannungsversorgungsnetz (5) versorgt wird, insbesondere aus einem Netz, das seinerseits aus einer Photovoltaik- oder Windkraftanlage (6) versorgt wird,
- die Schaltungseinrichtung (8) mittels eines Monitors (17) die Leistungsfähigkeit des Niederspannungsversorgungsnetzes (5) beobachtet,
- vor dem Starten eines gewählten Bearbeitungsprogramms der von der zugeordneten Güterbearbeitung abhängige Summen-Energiebedarf aller internen Verbraucher (11) über das gesamte Bearbeitungsprogramm ermittelt und mit dem aktuellen Energieangebot des Niederspannungsversorgungsnetzes (5) verglichen wird, und dass das Bearbeitungsprogramm erst dann gestartet wird, wenn der Vergleich ein höheres Energieangebot als den zugeordneten Summen-Energiebedarf ergeben hat,
- wobei der Energiebedarf jedes internen Verbrauchers (11.1 bis 11.3) bekannt und in der Schaltungseinrichtung (8) abgespeichert ist, und wobei die Versorgung der internen Verbraucher (11) in Abhängigkeit von ihrem Energiebedarf und von ihrem Verbrauchsprofil gestaffelt abgeschaltet wird, wenn das Energieangebot des Niederspannungsversorgungsnetzes (5) für die Speisung aller internen Verbraucher (11) zu gering wird, und die Wiedereinschaltung der internen Verbraucher (11.1 bis 11.3) nach derselben Abhängigkeit gestaffelt wird.

2. Hausgerät zum Durchführen eines Verfahrens nach Anspruch 1 mit internen Verbrauchern (11), mit einer Schaltungseinrichtung (8) zum Versorgen der internen Verbraucher (11) aus einem Niederspannungsversorgungsnetz (5), insbesondere aus einem Netz der Schutzkleinspannungsklasse und/oder aus einem Netz, das aus einer Photovoltaik- oder Windkraftanlage (6) versorgt wird, mit einer Schaltungsanordnung (15) für ein Energiemanagement, durch das die internen Verbraucher (11) nach ihrem Energiebedarf klassifiziert und mit Energie versorgt werden, und mit einer Programmsteuerungsanordnung (10) und Messaufnehmern (12) für die Steuerung von Bearbeitungsprogrammen von Gütern, wobei die Schaltungseinrichtung (8) einen Speicherbereich (14) zum Abspeichern der Energiebedarfe jedes einzelnen internen Verbrauchers (11.1 bis 11.3) und zum Abspeichern des jeweiligen Summen-Energiebedarfs aller internen Verbraucher (11) für jedes wählbare Betriebsprogramm sowie einen Monitor (17) für die Beobachtung der Leistungsfähigkeit des Niederspannungsversorgungsnetzes (5) enthält.

3. Hausgerät nach Anspruch 2, **dadurch gekennzeichnet, dass** der jeweilige Energiebedarf eines thermischen Verbrauchers (11.1) in Abhängigkeit der Einschalthäufigkeit der wählbaren Programme und/oder der Temperatur des jeweils zu erhitzenden Mediums gespeichert ist.

4. Hausgerät nach Anspruch 2 oder 3, **dadurch gekennzeichnet, dass** die Schaltungseinrichtung (8) einen Vergleicher (18) enthält, der ein positives Ausgangssignal für die Fortsetzung des gewählten Programms, wenn das Energieangebot größer ist als der Energiebedarf, und ein negatives Ausgangssignal führt, wenn das Energieangebot kleiner ist als der Energiebedarf.

5. Hausgerät nach Anspruch 4, **dadurch gekennzeichnet, dass** die Schaltungseinrichtung (8) im Hinblick auf die Fortsetzung des Bearbeitungsprogramms entscheidungsfähig ist in Abhängigkeit davon, ob die Abschaltung eines internen Verbrauchers (11.1 bis 11.3) den Erfolg des Bearbeitungsprogramms nicht oder nur tolerabel beeinflusst oder überhaupt infrage stellt.

6. Verfahren nach Anspruch 1, **dadurch gekennzeichnet, dass** bei der Ermittlung des Summen-Energiebedarfs die ungünstigsten Bedingungen zugrunde gelegt werden.

7. Verfahren nach Anspruch 1 oder 6, **dadurch gekennzeichnet, dass** bei einem aufgrund einer zu geringen Leistungsfähigkeit des Niederspannungsversorgungsnetzes (5) aufgehaltenen Betriebsprogramm die Leistungsfähigkeit ständig überwacht wird, und das Betriebsprogramm automatisch gestartet wird, sobald die Leistungsfähigkeit den Summen-Energiebedarf übersteigt.

8. Verfahren nach Anspruch 1 und/oder 6 bis 7, **dadurch gekennzeichnet, dass** eine Schutzkleinspannung mit dem Niederspannungsversorgungsnetz (5) bereitgestellt wird und dass alle internen Verbraucher (11) des Hausgeräts (1) aus dem Niederspannungsversorgungsnetz (5) der Schutzkleinspannungsklasse versorgt werden.

9. Hausgerät nach einem der Ansprüche 2 bis 5, **dadurch gekennzeichnet, dass** für die Summenbildung des Energiebedarfs der jeweilige Energiebedarf eines thermischen Verbrauchers (11.1) in Abhängigkeit der Einschalthäufigkeit der wählbaren Programme und/oder der Temperatur des jeweils zu erhitzenden Mediums gespeichert ist.

10. Hausgerät nach Anspruch 2 oder 9, **dadurch gekennzeichnet, dass** die Schaltungsanordnung (15) für das Energiemanagement einen Vergleicher (18) enthält, der ein positives Ausgangssignal für den Start des gewählten Betriebsprogramms, wenn das Energieangebot größer ist als der ermittelte Summen-Energiebedarf, und ein negatives Ausgangssignal führt, wenn das Energieangebot kleiner ist als der ermittelte Summen-Energiebedarf.

## Claims

1. Method for supplying an electric domestic appliance (1) with a circuit device (8) for supplying internal consumers (11), with a circuit arrangement (15) for energy management through which the internal consumers (11) are classified in accordance with their energy requirements and supplied with energy, and with a program control arrangement (10) and measurement sensors (12) for controlling item treatment programs, **characterised in that**
- the domestic appliance is supplied from a low voltage supply network (5), especially from a network which is supplied for its part by a photovoltaic power station or wind power station (6),
- the circuit arrangement (8) uses a monitor (17) to observe the performance capability of the low voltage supply network (5),
- before a selected processing program is started, the total energy requirement of all internal consumers (11) over the entire processing program depending on the assigned item processing is determined and is compared with the current energy offered by the low voltage supply network (5), and that the processing program is only started if the comparison has resulted in a higher energy offering than the assigned total energy requirement.
- wherein the energy requirement of each internal consumer (11.1 to 11.3) is known and stored in the circuit device (8), and wherein the supply of the internal consumers (11) is switched off in stages depending on their energy requirement and on their consumption profile if the energy offered by the low voltage supply network (5) is too low for feeding all internal consumers (11) and that the switching back on of the internal consumers (11.1 to 11.3) is carried out in stages in accordance with the same dependency.

2. Domestic appliance for carrying out a method according to claim 1 with internal consumers (11), with a circuit device (8) for supplying the internal consumers (11) from a low voltage supply network (5), especially from a protected extra-low voltage network class and/or from a network which is supplied by a photovoltaic power station or wind power station (6), with a circuit arrangement (15) for energy management, through which the internal consumers (11) are classified in accordance with their energy requirement and supplied with energy and with a program control arrangement (10) and measurement sensors (12) for the control of the item processing programs, wherein the circuit device (8) contains a memory area (14) for storing the energy requirements of each individual internal consumer (11.1 to 11.3) and for storing the respective total energy requirement of all internal consumers (11) for each selectable operating program and a monitor (17) for observing the performance capability of the low voltage supply network (5).

3. Domestic appliance according to claim 2, **characterised in that** the respective energy requirement of a thermal consumer (11.1) is stored as a function of the switch-on frequency of the selectable programs and/or the temperature of the medium to be heated in each case.

4. Domestic appliance according to claim 2 or 3, **characterised in that** the circuit device (8) contains a comparator (18) which carries a positive output signal for the continuation of the selected program if the energy offered is greater than the energy required, and carries a negative output signal if the energy offered is less than the energy required.

5. Domestic appliance according to claim 4, **characterised in that** the circuit device (8) is capable of deciding in respect of the continuation of the processing program as a function of whether the switching off of an internal consumer (11.1 to 11.3) does not or only tolerably influences the success of the processing program or puts it into question at all.

6. Method according to claim 1, **characterised in that** the most unfavourable conditions are used as a basis for the determination of the total energy requirement.

7. Method according to claim 1 or 6, **characterised in that**, for an operating program halted as a result of a performance capability of the low voltage supply network (5) that is too low, the performance capability is constantly monitored and the operating program is automatically started as soon as the performance capability exceeds the total energy requirement.

8. Method according to claim 1 and/or 6 to 7, **characterised in that** a protected extra low voltage is provided with the low voltage supply network (5) and that all internal consumers (11) of the domestic appliance (1) are supplied from the low voltage supply network (5) of the protected extra low voltage class.

9. Domestic appliance according to one of claims 2 to 5, **characterised in that**, for forming the sum of the energy requirement, the respective energy requirement of a thermal consumer (11.1) is stored as a function of the switch-on frequency of the selectable programs and/or of the temperature of the medium to be heated in each case.

10. Domestic appliance according to claim 2 or 9, **characterised in that** the circuit arrangement (15) contains a comparator (18) for energy management, which carries a positive output signal for the start of the selected operating program if the energy offered is greater than the total energy requirement determined and carries a negative output signal if the energy offered is less than the energy required.

## Revendications

1. Procédé d'alimentation d'un appareil ménager (1) électrique comprenant un dispositif de circuit (9) destiné à alimenter des consommateurs internes (11), comprenant un agencement de circuit (15) pour une gestion d'énergie au moyen de laquelle les consommateurs internes (11) sont classés suivant leur besoin en énergie et alimentés en énergie, et comprenant un agencement de commande de programmes (10) et des capteurs de mesure (12) pour la commande de programmes de traitement de biens, **caractérisé en ce que**
- l'appareil ménager est alimenté à partir d'un réseau d'alimentation à basse tension (5), notamment à partir d'un réseau qui est alimenté de son côté à partir d'une installation photovoltaïque ou d'une installation éolienne (6),
- **en ce que** le dispositif de circuit (8) observe la capacité du réseau d'alimentation à basse tension (5) au moyen d'un écran de contrôle (17),
- **en ce qu'**avant le démarrage d'un programme de traitement sélectionné, le besoin en énergie total, dépendant du traitement de biens attribué, de tous les consommateurs internes (11) est déterminé par l'intermédiaire de la totalité du programme de traitement et est comparé avec l'offre en énergie actuelle du réseau d'alimentation à basse tension (5), et **en ce que** le programme de traitement n'est démarré que lorsque le résultat de la comparaison présente une offre en énergie supérieure au besoin en énergie total attribué,
- le besoin en énergie de chaque consommateur interne (11.1 à 11.3) étant connu et mémorisé dans le dispositif de circuit (8), et l'alimentation des consommateurs internes (11) étant arrêtée de manière échelonnée en fonction de leur besoin en énergie et de leur profil de consommation lorsque l'offre en énergie du réseau d'alimentation à basse tension (5) est trop faible pour l'alimentation de tous les consommateurs internes (11), et la remise en service des consommateurs internes (11.1 à 11.3) étant échelonnée suivant la même dépendance.

2. Appareil ménager destiné à la réalisation d'un procédé selon la revendication 1, comprenant des consommateurs internes (11), comprenant un dispositif de circuit (8) pour l'alimentation des consommateurs internes (11) à partir d'un réseau d'alimentation à basse tension (5), notamment à partir d'un réseau de la classe de basse tension de protection et/ou à partir d'un réseau qui est alimenté à partir d'une installation photovoltaïque ou d'une installation éolienne (6), comprenant un agencement de circuit (15) pour une gestion d'énergie au moyen de laquelle les consommateurs internes (11) sont classés suivant leur besoin en énergie et alimentés en énergie, et comprenant un agencement de commande de programmes (10) et des capteurs de mesure (12) pour la commande de programmes de traitement de biens, le dispositif de circuit (8) comprenant une zone de mémoire (14) pour mémoriser les besoins en énergie de chaque consommateur interne (11.1 à 11.3) individuel et pour mémoriser le besoin en énergie total respectif de tous les consommateurs internes (11) pour chaque programme de fonctionnement sélectionnable, ainsi qu'un écran de contrôle (17) pour l'observation de la capacité du réseau d'alimentation à basse tension (5).

3. Appareil ménager selon la revendication 2, **caractérisé en ce que** le besoin en énergie respectif d'un consommateur thermique (11.1) est mémorisé en fonction de la fréquence de fonctionnement des programmes sélectionnables et/ou de la température du milieu à chauffer respectivement.

4. Appareil ménager selon la revendication 2 ou 3, **caractérisé en ce que** le dispositif de circuit (8) comporte un comparateur (18) qui conduit un signal de sortie positif pour la poursuite du programme sélectionné lorsque l'offre en énergie est supérieure au besoin en énergie, et un signal de sortie négatif lorsque l'offre en énergie est inférieure au besoin en énergie.

5. Appareil ménager selon la revendication 4, **caractérisé en ce que** le dispositif de circuit (8), au regard de la poursuite du programme de traitement, est capable de décider en fonction du fait si l'arrêt d'un consommateur interne (11.1 à 11.3) n'influence pas ou influence seulement de manière tolérable la réussite du programme de traitement ou la remet en cause.

6. Procédé selon la revendication 1, **caractérisé en ce que** lors de la détermination du besoin en énergie total, les conditions les plus défavorables sont prises en compte.

7. Procédé selon la revendication 1 ou 6, **caractérisé en ce que** lorsqu'un programme de fonctionnement est arrêté en raison d'une capacité trop faible du réseau d'alimentation à basse tension (5), la capacité est contrôlée en permanence, et le programme de fonctionnement est démarré automatiquement dès que la capacité dépasse le besoin en énergie total.

8. Procédé selon les revendications 1 et/ou 6 à 7, **caractérisé en ce qu'**une basse tension de protection est fournie avec le réseau d'alimentation à basse tension (5) et **en ce que** tous les consommateurs internes (11) de l'appareil ménager (1) sont alimentés à partir du réseau d'alimentation à basse tension (5) de la classe de basse tension de protection.

9. Appareil ménager selon l'une quelconque des revendications 2 à 5, **caractérisé en ce que** pour la formation du total du besoin en énergie, le besoin en énergie respectif d'un consommateur thermique (11.1) est mémorisé en fonction de la fréquence de fonctionnement des programmes sélectionnables et/ou de la température du milieu à chauffer respectivement.

10. Appareil ménager selon la revendication 2 ou 9, **caractérisé en ce que** l'agencement de circuit (15) pour la gestion d'énergie comporte un comparateur (18) qui conduit un signal de sortie positif pour le démarrage du programme sélectionné lorsque l'offre en énergie est supérieure au besoin en énergie total déterminé, et un signal de sortie négatif lorsque l'offre en énergie est inférieure au besoin en énergie total déterminé.
